# EUROPEAN PATENT SPECIFICATION

(11) **EP 0 721 972 B1**
(45) Date of publication and mention of the grant of the patent: **05.12.2001**
(21) Application number: 96200023.8
(22) Date of filing: 05.01.1996
(51) Int. Cl.: C08L 23/04

(54) **Thermoplastic-elastomeric composition**
Thermoplastische Elastomerzusammensetzung
Composition d'élastomère thermoplastique

(30) Priority: 10.01.1995 IT MI950026
(43) Date of publication of application: 17.07.1996
(73) Proprietor: Polimeri Europa S.r.l., 90139 Palermo (IT)
(72) Inventor: Franco, Raffaele, I-30173 Mestre (Venezia) (IT); Carraro, Claudio, I-30035 Mirano (Venezia) (IT); Moro, Alessandro, I-30030 Cazzago di Pianiga (Venezia) (IT); Amico, Antonio, I-22064 Casatenovo (Como) (IT); Princiotta, Gualtiero, I-20097 San Donato Milanese (Milano) (IT)
(74) Representative: Fusina, Gerolamo

(56) References cited:
- EP-A- 0 164 217
- EP-A- 0 256 724
- GB-A- 2 195 347

## Description

The present invention relates to thermoplastic elastomeric compositions basically comprising a polyolefin, above all polypropylene, and an ethylene-alpha-olefin copolymer which may also contain propylene, with density preferably comprised within the range of from 0.885 to 0.895 g/cm³.

More specifically, the present invention relates to a thermoplastic elastomeric composition obtainable by a process of dynamic crosslinking an amount of from 10 to 50% by weight of a phase (A) consisting of at least one propylene homopolymer or a copolymer of propylene with not more than 10% of ethylene, said homopolymer or copolymer having a density of about 0.9 g/cm³, and an amount of from 90 to 50% by weight of a phase (B) consisting of a copolymer of ethylene, a second alpha-C₄-C₈-olefin and propylene, said copolymer having a density equal to, or lower than, 0.9 g/cm³, the sum of (A) and (B) being 100%, in the presence of :
(C) a free-radical generator;
(D) a non-polymeric compound with double bonds in terminal positions, as cross-linking co-agent; and with the possible addition of
(E) such inert additives as carbon black, extender oil, stabilizers, and still others.
The preparation of compositions based on thermoplastic polymers and vulcanized rubber, by means of dynamic vulcanization methods, is known and is reported in a large number of documents: reference is made, e.g., to U.S. patent Nos. 3,862,106; 3,037,954 and 3,806,558.

According to the prior art, the elastomeric component is caused to vulcanize during its compounding with the plastomer in the molten state, by using customary crosslinking agents. If the plastomer amount in the end compound is large enough, at vulcanization end a composition is obtained which displays good high-temperature processability, also in the presence of large amounts of vulcanized elastomer.

In its turn, French patent application No. 2,408,632 teaches that plasto-elastomeric compositions can be obtained by dynamic vulcanization by using, as the crosslinking agents, halogenated phenolic resins, or virgin phenolic resins in the presence of hydrogen donors and with metal oxides.

The resulting products, comprising polyolefins and EPDM rubbers and with a resin content comprised within the range of from 5 to 20% by weight, display the above said good high-temperature processability and still other valuable elastomeric characteristics which, unfortunately, decay when application temperatures reach too high values.

Other improvements in applications of such plasto-elastomeric compositions were achieved by submitting said EPDM-polyolefin blends to crosslinking reactions in the presence of free-radical generators (U.S. patent No. 3,957,919) or by preparing the same composition, with the polyolefinic base being preferably constituted by polypropylene, by starting from an intimate blend of said polyolefin, EDPM and crosslinking agent with a crosslinking co-adjuvant selected from the condensation products of beta(alpha-phenyl)-acrolein with cyclic ketones, or constituted by furfurylidene-acetone, heating said mixture up to a temperature comprised within the range of from 160 to 240°C until said polyolefin is caused to melt and reach a crosslinking rate comprised within the range of from 50 to 80% by weight based on initially present elastomeric copolymer (European patent Application No. 361,205).

The resulting end product actually displays a good high-temperature processability and retains elastic characteristics also at high temperatures, thus being suitable for uses for which degradation phenomena or failures may be serious drawbacks, because not always they can be easily and immediately detected: for example, when such products are used for gaskets or for preparing special sleeves.

EP-A-0256724 relates to thermoplastic elastomer composition TPE comprising: (A) 30-70 parts by weight of a propylene homo or copolymer having a MFR of 0.1-50 and (B) 70-30 parts by weight of an ethylene/ C₄-C₈-alpha-olefin (VLDPE) having a density of 0.860-0.910 g/cc, said components being dynamically crosslinked in the presence of peroxides as dicumylperoxide and of crosslinking coagents.

EP-A-0164217 relates to TPE comprising: (A) 50 to 10 parts by weight of a propylene homo or copolymer and (B) 10 to 80 parts by weight of an ethylenel C₄-C₈-alpha-olefin, having a density of 0.9 g/cc, partially crosslinked in the presence of peroxides as dicumylperoxide and of crosslinking aids.

GB-A-2195347 relates to TPE comprising 10-40% by weight of a VLDPE of density 0.860-0.910 g/cc and 15-35% by weight of a propylene copolymer which are dynamically cured with peroxides and crosslinking coagents containing terminal double bonds.

Unfortunately, even the best thermoplastic-elastomeric compositions described heretofore, or anyway known from the prior art, or also marketed and used at commercial Levels, not always are easily produced, due to such reasons as, e.g., the need for using specific equipment for fabricating rubber, generally available as bales and, anyway, their production sometimes implies unbearable costs by careful industrial logics.

The present Applicant has found now, and this is the subject-matter of the present invention, that a thermoplastic-elastomeric composition can be prepared showing excellent processibility when hot, good elastic properties also at high temperatures, extremely good weatherability and which, furthermore, can be produced in a simple and cheap way, by starting from raw materials all of which are available as pellets, and are therefore easily processable on usual equipment for thermoplastic resins processing.

Such a thermoplastic-elastomeric composition is obtainable by a process of dynamic crosslinking an amount of from 10 to 50% by weight of a phase (A) consisting of at least one propylene homopolymer or a copolymer of propylene with not more than 10% of ethylene, said homopolymer or copolymer having a density of about 0.9 g/cm³, and an amount of from 90 to 50% by weight of a phase (B) consisting of a copolymer of ethylene, a second alpha-C₄-C₈-olefin and propylene, said copolymer having a density equal to, or lower than, 0.9 g/cm³, the sum of (A) and (B) being 100%, in the presence of:
(C) a free-radical generator;
(D) a non-polymeric compound with double bonds in terminal positions, as cross-linking co-agent.
The (A) phase is preferably consists of a propylene homopolymer, or a propylene copolymer with not more than 10% of ethylene, and phase (B) consists of an ethylene-propylene-butene terpolymer with a density preferably comprised within the range of from 0.885 to 0.895 g/cm³, as determied according to ASTM D1505.

Such polymers are prepared according to by now well-known techniques for those skilled in the art, by polymerizing the selected monomers in the presence of the so-said "Ziegler catalysts". In particular, the copolymer which constitutes the (B) phase is obtained by high-pressure polymerizing ethylene, butene and propylene in suitable proportions for obtaining the desired density value.

The free-radical generator (C) can be selected from a wide range of compounds, e.g., from
-- tert-butyl-peroxybenzoate;
-- 1,1-di-tert-butyl-peroxy-3,3,5-trimethylcyclohexane;
-- 4,4-bis(tert-butyl-peroxy)-N-butyl valerate;
-- 2,5-dimethyl-2,5-(tert-butylperoxy)-hexane;
-- dicumylperoxide
and so forth.

Using dicumylperoxide is preferred above all.

The crosslinking co-agent (D) is, as said, a non-polymeric compound with double bonds in terminal positions: it too can be selected from a wide range of species, among which the following may be reminded: triallyl cyanurate, triallyl isocyanurate, ethylene glycol dimethacrylate; diallyl terephtalate; m-phenylene dimaleimide, 1,2-cis-polybutadiene.

Use of triallyl isocyanurate proved to be particularly effective.

The composition of the present invention is prepared by dynamically crosslinking the (A) and (B) phases in the presence of the (C) free-radical generator and (D) crosslinking co-agent, by adding the (A) phase either as one single portion at process beginning, or progressively during the whole process time until the desired percent level thereof is reached.

Said crosslinking is carried out according to well-known techniques, at a temperature comprised within the range of from 190°C to 260°C.

Both the free-radical generator and the cross-linking co-agent are added in amounts comprised within the range of from 0.2 to 2.5 phr.

Further process details -- which, anyway, everyone skilled in the art will be able to extrapolate without any problems -- will be evident from the reading of the following illustrative examples supplied in order to better illustrate the invention without limiting the scope thereof.

### Example 1

A blend of pellets composed by 80% VLDPE Clearflex XHGO ex Enichem with MFR (190°C; 2.16 kg) of 2.6 and density of 0.887 g/cm³ and 20% isotactic PP homopolymer with MFR (230°C; 2.16 kg) of 2.2 and density of 0.9 g/cm³ was charged to the cell of a "Brabender" Plastograph thermostatted at 180°C and with a rotor revolution speed of 100 ppm. Five minutes later, 2.5 phr of triallyl isocyanurate (TAIC) as a 50% dispersion in silica (Perkalink 301-50D ex Akzo) was added and then, 2 minutes later, 0.25 phr of 2,5-dimethyl-2,5-bis(tert-butylperoxy)-hexane (Trigonox 101 ex Akzo) was added by pipette.

The resulting mixture was processed for a total time of 15 minutes and the temperature of the molten mass, after reaching the value of 210°C at the 7th minute, stabilized then at approximately 195°C.

The material was then recovered, ground by cryogenic mill and compression moulded at 230°C for 10 minutes, in order to produce a 3 mm thick plate.

From said plate specimens were obtained, in this case by means of a hollow punch, for the characterization tests, which were as follows:
(I) Measurement of Shore (D) hardness according to ASTM D22 40;
(II) Measurement of Tensile Properties according to ASTM D1708, modified, according to as reported by A.Y. Coran and R. Patel [Rubber, Chem. and Tech., 141, 53 (1980)], by adding the change in stretching speed, which, at 30% deformation, was changed from 2.5 to 25 cm/minute;
(III) Measurement of Compression Set according to ASTM D395, at 100°C for 22 hours;
(IV) Measurement of VICAT Softening Point according to ASTM D1525, under a load of 1 kg and with a bath heating speed of 120°C/hour;
(V) Measurement of the Insolubles Percent Level and of the Swelling Degree according to ASTM D2765, carried out in xylene under refluxing conditions.
The data obtained are summarized in the following table with the relevant standard deviation values.

**Table**

| | | |
|---|---|---|
| - Hardness, Shore D (5s) | ASTM 2240 | 38 |
| - Modulus 100% (Mpa) | ASTM D1708 | 5.8 (0.1) |
| - Ultimate Tensile Strength (UTS) (MPa) | ASTM D1708 | 9.4 (0.2) |
| - Ultimate Elongation (UE) (%) | ASTM D1708 | 290 (10) |
| - Compression Set (%) | ASTM D395 | 51.2 |
| - VICAT (1 kg) | | 60 |
| - Insolubles % (percent content based on crosslinked phase) | | 61 (76) |
| - Swelling ratio | | 6 |

### Example 2

On a "Brabender" single screw extruder of laboratory size with 19/25D cylinder, single-compression, head capillary, 10:2 L:D screw a masterbatch based on VLDPE Clearflex XHGO ex Enichem, with MFR (190°C; 2.16 kg) of 2.6 and density of 0.887 g/cm³ admixed with 0.5 phr of dicumyl peroxide and 2.5 phr of triallyl isocyanurate TAIC as a 50% dispersion in silica (Perkalink 301-501 ex Akzo) was prepared at 100 rpm and 120°C. Thereafter, by means of the same extruder a blend of pellets consisting of 80% of said masterbatch and 20% of isotactic PP homopolymer with MFR (230°C; 2.16 kg) of 2.2 and density of 0.9 g/cm³ was extruded at 100 rpm and 220°C.

The obtained material was pelletized and was then compression moulded during 10 minutes at 230°C. The resulting plate was evaluated according to the same methodologies as disclosed in the preceding example and yielded the following results.

**Table**

| | | |
|---|---|---|
| - Hardness, Shore D (5s) | ASTM 2240 | 41 |
| - Modulus 100% (Mpa) | ASTM D1708 | 6.6 (0.1) |
| - Ultimate Tensile Strength (UTS) (MPa) | ASTM D1708 | 8.1 (0.8) |
| - Ultimate Elongation (UE) (%) | ASTM D1708 | 200 (30) |
| - Compression Set (%) | ASTM D395 | 53.1 |
| - VICAT (1 kg) | | 69 |
| - Insolubles % (percent content based on crosslinked phase | | 60 (74) |
| - Swelling ratio | | 7 |

### Example 3

In the following example, the data are reported which were measured on materials produced by extruding on a Brabender single-screw extruder at 100 rpm and 220°C, compounds obtained from different masterbatches based on VLDPE and isotactic PP homopolymer with MFR (230°C; 2.16 kg) of 2.2 and density of 0.9 g/cm³.

The masterbatches were prepared as disclosed in the preceding example, on following bases:
(1) VLDPE Clearflex FFDO ex Enichem with MFR (190°C; 2.16 kg) of 0.8 and density 0.9;
(2) ULDPE Clearflex XDGO ex Enichem with MFR (190°C; 2.16 kg) of 2.6 and density 0.887;
(3) VLDPE Clearflex MPDO ex Enichem with MFR (190°C; 2.16 kg) of 7.5 and density 0.9,
and containing different amounts of dicumyl peroxide and possibly TAIC (Perkalink 301-50D) crosslinking co-agent.

The following table reports the data relevant to the obtained compositions in the ratio of 80:20 by weight, using the masterbatch or straight VLDPE and, in the case of Clearflex FFDO based products, on masterbatches with different additives.

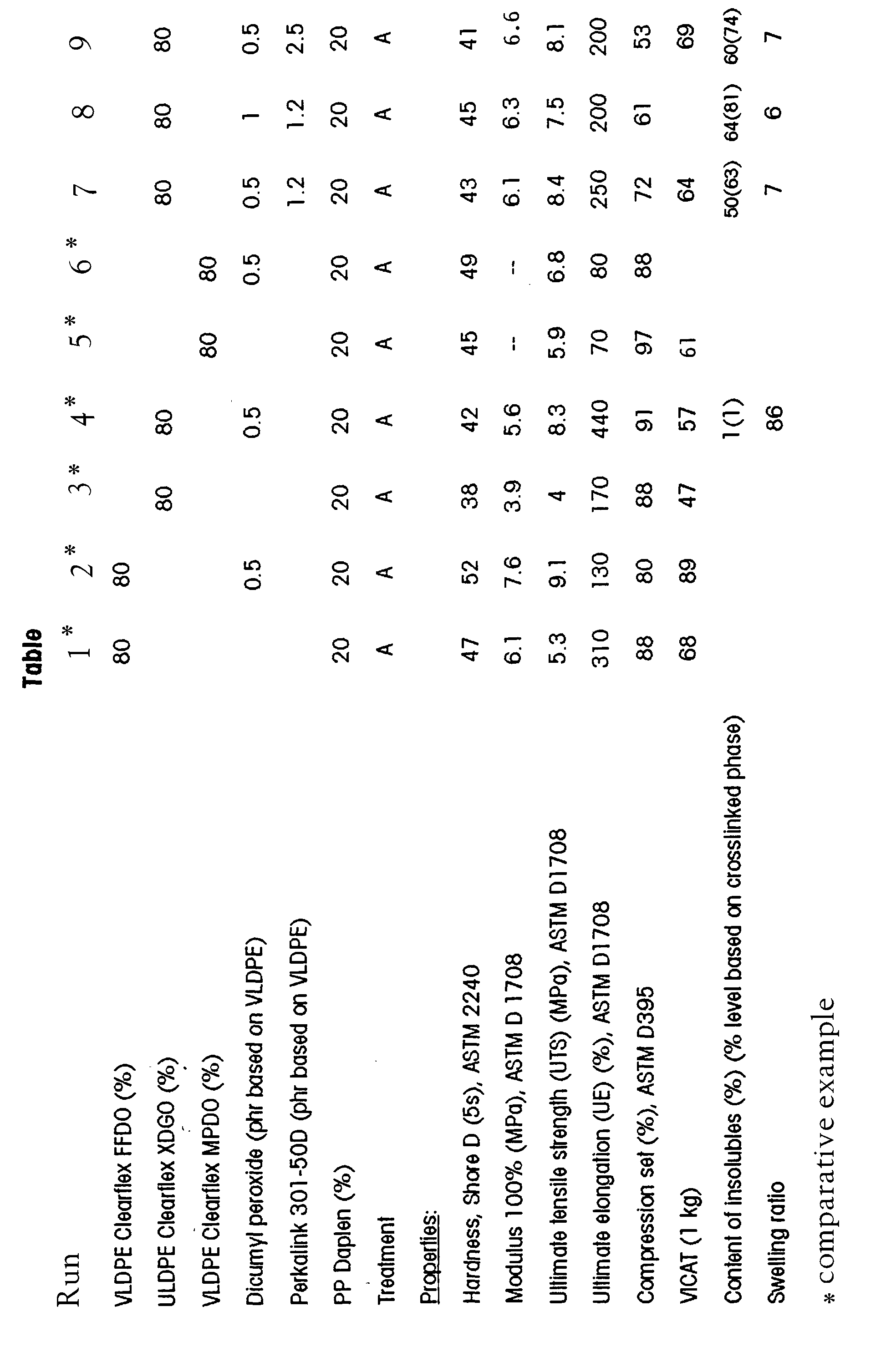

## Claims

1. Thermoplastic elastomeric composition obtainable by a process of dynamic crosslinking an amount of from 10 to 50% by weight of a phase (A) consisting of at least one propylene homopolymer or a copolymer of propylene with not more than 10% of ethylene, said homopolymer or copolymer having a density of about 0.9 g/cm³, and an amount of from 90 to 50% by weight of a phase (B) consisting of a copolymer of ethylene, a second alpha-C₄-C₈-olefin and propylene, said copolymer having a density equal to, or lower than, 0.9 g/cm³, the sum of (A) and (B) being 100%, in the presence of:
(C) a free-radical generator;
(D) a non-polymeric compound with double bonds in terminal positions, as cross-linking co-agent.

2. Thermoplastic elastomeric composition according to claim 1, wherein said free-radical generator has a half-life time of 1 minute at a temperature higher than 120°C.

3. Thermoplastic elastomeric composition according to claim 1, wherein said (B) phase is an ethylene-propylene-butene terpolymer with a density comprised within the range of from 0.885 to 0.895 g/cm³.

4. Thermoplastic elastomeric composition according to claim 2, wherein the free-radical generator is dicumylperoxide.

5. Thermoplastic elastomeric composition according to claim 1, wherein the cross-linking co-agent is triallyl isocyanurate.

6. Thermoplastic elastomeric composition according to claims 1 or 2, which comprises an inert additive.

7. Thermoplastic elastomeric composition according to claims 1, 2 or 3, wherein the free-radical generator and/or the cross-linking co-agent are each added in amounts in the range of from 0.2 to 2.5 phr.

8. A method for preparing thermoplastic elastomeric composition according to claim 1, comprising:
mixing said phases (A) and (B) with said free-radical generator and said cross-linking co-agent; and
dynamic crosslinking said mixture thereby forming said thermoplastic elastomer composition.

9. Method according to claim 8, wherein in the preparation of said mixture of the first step, the (A) phase polymer is added in one single portion at the beginning of the process.

10. Method according to claim 8, wherein the (A) phase polymer is added progressively to the mixture as the process of dynamic crosslinking proceeds.

## Patentansprüche

1. Thermoplastische Elastomerzusammensetzung, erhältlich mit Hilfe eines Verfahrens des dynamischen Vernetzens eines Anteils von 10 bis 50 Gew.-% einer Phase (A), die aus mindestens einem Propylen-Homopolymer oder einem Copolymer von Propylen mit nicht mehr als 10 % Ethylen besteht, wobei das Homopolymer oder Copolymer eine Dichte von etwa 0,9 g/cm³ hat, und eines Anteils von 90 bis 50 Gew.-% einer Phase (B), die aus einem Copolymer von Ethylen, einem zweiten C₄-C₈-α-Olefin und Propylen besteht, wobei das Copolymer eine Dichte von 0,9 g/cm³ oder weniger hat und die Summe von (A) und (B) 100% beträgt, in Gegenwart
(C) eines Radikalbildners,
(D) einer nicht polymeren Verbindung mit endständigen Doppelbindungen als Hilfsvernetzungsmittel.

2. Thermoplastische Elastomerzusammensetzung nach Anspruch 1, wobei der Radikalbildner eine Halbwertszeit von 1 Minute bei einer Temperatur von mehr als 120°C hat.

3. Thermoplastische Elastomerzusammensetzung nach Anspruch 1, wobei die Phase (B) ein Ethylen-Propylen-Buten-Terpolymer mit einer Dichte im Bereich von 0,885 bis 0,895 g/cm³ ist.

4. Thermoplastische Elastomerzusammensetzung nach Anspruch 2, wobei der Radikalbildner Dicumylperoxid ist.

5. Thermoplastische Elastomerzusammensetzung nach Anspruch 1, wobei das Hilfsvernetzungsmittel Triallylisocyanurat ist.

6. Thermoplastische Elastomerzusammensetzung nach Anspruch 1 oder 2, welche einen inerten Zusatzstoff enthält.

7. Thermoplastische Elastomerzusammensetzung nach Anspruch 1, 2 oder 3, wobei der Radikalbildner und/oder das Hilfsvernetzungsmittel jeweils in Mengen im Bereich von 0,2 bis 2,5 phr zugesetzt werden.

8. Verfahren zur Herstellung einer thermoplastischen Elastomerzusammensetzung nach Anspruch 1, welches umfasst:
das Vermischen der Phasen (A) und (B) mit dem Radikalbildner und dem Hilfsvernetzungsmittel und
das dynamische Vernetzen des Gemisches unter Bildung der thermoplastischen Elastomerzusammensetzung.

9. Verfahren nach Anspruch 8, wobei bei der Herstellung des Gemisches der ersten Stufe das Polymer der Phase (A) zu Beginn des Verfahrens in einem einzigen Anteil zugesetzt wird.

10. Verfahren nach Anspruch 8, wobei das Polymer der Phase (A) dem Gemisch nach und nach zugesetzt wird, während das dynamische Vernetzungsverfahren fortschreitet.

## Revendications

1. Composition thermoplastique élastomère susceptible d'être obtenue par un processus de réticulation dynamique d'une proportion de 10 à 50 % en poids d'une phase (A) constituée d'au moins un homopolymère de propylène ou d'un copolymère de propylène avec pas plus de 10 % d'éthylène, ledit homopolymère ou copolymère ayant une masse volumique d'environ 0,9 g/cm³, et d'une proportion de 90 à 50 % en poids d'une phase (B) constituée d'un copolymère d'éthylène, d'une deuxième alpha-oléfine en C₄-C₈ et de propylène, ledit copolymère ayant une masse volumique inférieure ou égale à 0,9 g/cm³, la somme de (A) et de (B) étant de 100 %, en présence :
(C) d'un générateur de radicaux libres ;
(D) d'un composé non polymère contenant des doubles liaisons en positions terminales, en tant que co-agent de réticulation.

2. Composition thermoplastique élastomère selon la revendication 1, dans laquelle ledit générateur de radicaux libres a une durée de demi-vie de 1 minute à une température supérieure à 120°C.

3. Composition thermoplastique élastomère selon la revendication 1, dans laquelle ladite phase (B) est un terpolymère éthylène-propylène-butène ayant une masse volumique dans la gamme de 0,885 à 0,895 g/cm³.

4. Composition thermoplastique élastomère selon la revendication 2, dans laquelle le générateur de radicaux libres est le peroxyde de dicumyle.

5. Composition thermoplastique élastomère selon la revendication 1, dans laquelle le co-agent de réticulation est l'isocyanurate de triallyle.

6. Composition thermoplastique élastomère selon les revendications 1 ou 2, qui comprend un additif inerte.

7. Composition thermoplastique élastomère selon les revendications 1, 2 ou 3, dans laquelle le générateur de radicaux libres et/ou le co-agent de réticulation sont chacun ajoutés en des quantités dans la gamme de 0,2 à 2,5 phr.

8. Procédé de préparation d'une composition thermoplastique élastomère selon la revendication 1, comprenant :
le mélange desdites phases (A) et (B) avec ledit générateur de radicaux libres et ledit co-agent de réticulation ; et
la réticulation dynamique dudit mélange afin de former ladite composition thermoplastique élastomère.

9. Procédé selon la revendication 8, dans lequel dans la préparation dudit mélange de la première étape, le polymère de phase (A) est ajouté en une seule fois au début du procédé.

10. Procédé selon la revendication 8, dans lequel le polymère de la phase (A) est ajouté progressivement au mélange au fur et à mesure que le procédé de réticulation dynamique se déroule.
